(19) Europäisches Patentamt
European Patent Office
Office européen des brevets

(11) EP 4 765 252 A1

(12) EUROPEAN PATENT APPLICATION
published in accordance with Art. 153(4) EPC

(43) Date of publication:
24.06.2026 Bulletin 2026/26

(51) International Patent Classification (IPC):
H01M 4/583 (2010.01)     H01M 10/0525 (2010.01)
H01M 4/02 (2006.01)

(21) Application number: 24908081.3

(22) Date of filing: 18.12.2024

(52) Cooperative Patent Classification (CPC):
H01M 4/02; H01M 4/583; H01M 10/0525;
Y02E 60/10

(86) International application number:
PCT/KR2024/020638

(87) International publication number:
WO 2025/135798 (26.06.2025 Gazette 2025/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.12.2023 KR 20230188960

(71) Applicant: LG Energy Solution, Ltd.
Seoul 07335 (KR)

(72) Inventors:
• LEE, Jun Won
  Daejeon 34122 (KR)
• WOO, Sang Wook
  Daejeon 34122 (KR)

(74) Representative: Hoffmann Eitle
Patent- und Rechtsanwälte PartmbB
Arabellastraße 30
81925 München (DE)

(54) **NEGATIVE ELECTRODE ACTIVE MATERIAL, AND NEGATIVE ELECTRODE AND SECONDARY BATTERY COMPRISING SAME**

(57) The present invention relates to a negative electrode active material. Specifically, the negative electrode active material comprises: artificial graphite particles; and a nitrogen element, an oxygen element, and a hydrogen element present on the surface of, inside, or both on the surface of and inside the artificial graphite particles, wherein the content of the nitrogen element is 80 to 180 mg per kg of the negative electrode active material.

*FIG. 1*

**Description**

TECHNICAL FIELD

The present invention relates to a negative electrode active material, a negative electrode, and a secondary battery including the same.

BACKGROUND ART

In line with growing concerns about environmental issues, studies are being conducted on electric vehicles (EVs) and hybrid electric vehicles (HEVs) capable of replacing vehicles using fossil fuels, such as gasoline vehicles and diesel vehicles, which are one of main causes of air pollution. Secondary batteries for electric vehicles are used as a power source for the EVs and the HEVs. Currently commercialized secondary batteries for electric vehicles include nickel cadmium batteries, nickel hydrogen batteries, nickel zinc batteries, and lithium ion batteries. Among the secondary batteries for electric vehicles, various studies are being conducted on the lithium-ion batteries due to their advantages, including a substantially low memory effect compared to nickel-based batteries to allow a high degree of freedom in charging and discharging, a low self-discharge rate, and exhibition of high energy density, a high discharge voltage and output stability.

DISCLOSURE OF THE INVENTION

TECHNICAL PROBLEM

An aspect of the present invention provides a negative electrode active material for a lithium secondary battery, which prevents or suppresses a decrease in discharge capacity while preventing or suppressing surface exfoliation (peeling) of an artificial graphite-based negative electrode active material and a resultant electrolyte side reaction defect, thereby improving initial efficiency, maintaining discharge capacity, and improving rapid charge performance of the secondary battery.

Another aspect of the present invention provides a negative electrode including the negative electrode active material described above.

Still another aspect of the present invention provides a lithium secondary battery including the negative electrode described above.

MEANS FOR SOLVING THE PROBLEM

[1] The present invention provides a negative electrode active material comprising: artificial graphite particles; and a nitrogen element, an oxygen element, and a hydrogen element present on a surface, at an inside, or on the surface and at the inside of the artificial graphite particles, wherein the nitrogen element is included in an amount of 80 mg to 180 mg per 1 kg of the negative electrode active material.

[2] The present invention provides the negative electrode active material according to the above [1], wherein the oxygen element is included in an amount of 650 mg to 1,000 mg per 1 kg of the negative electrode active material, and the hydrogen element is included in an amount of 300 mg to 500 mg per 1 kg of the negative electrode active material.

[3] The present invention provides the negative electrode active material according to at least one of the above [1] to [2], wherein a ratio of a weight of the nitrogen element in the negative electrode active material to a weight of the oxygen element in the negative electrode active material is 0.12 or more.

[4] The present invention provides the negative electrode active material according to at least one of the above [1] to [3], wherein a ratio of a weight of the hydrogen element in the negative electrode active material to a weight of the oxygen element in the negative electrode active material is 0.47 or more.

[5] The present invention provides the negative electrode active material according to at least one of the above [1] to [4], wherein a ratio of a total weight of the nitrogen element and the hydrogen element in the negative electrode active material to a weight of the oxygen element in the negative electrode active material is 0.5 or more.

[6] The present invention provides the negative electrode active material according to at least one of the above [1] to [5], wherein a total weight of the nitrogen element, the oxygen element, and the hydrogen element present in the negative electrode active material is 1,000 mg to 1,600 mg per 1 kg of the negative electrode active material.

[7] The present invention provides the negative electrode active material according to at least one of the above [1] to [6], wherein the artificial graphite particles are in a form of secondary particles in which two or more primary particles are assembled.

[8] The present invention provides the negative electrode active material according to at least one of the above [1] to [7], wherein a graphitization degree of the negative electrode active material is 90% to 99%.

[9] The present invention provides the negative electrode active material according to at least one of the above [1] to [8], wherein the negative electrode active material has a BET specific surface area of 1 $m^2/g$ to 8 $m^2/g$.

[10] The present invention provides the negative electrode active material according to at least one of the above [1] to [9], further comprising: an amorphous carbon coating layer positioned on the artificial graphite particles.

[11] The present invention provides a negative electrode comprising the negative electrode active material according to at least one of the above [1] to [10].

[12] Also, the present invention provides the negative electrode according to the above [11]; a positive electrode disposed to face the negative electrode; a separator interposed between the negative electrode and the positive electrode; and a non-aqueous electrolyte.

EFFECT OF THE INVENTION

The negative electrode active material according to the present invention includes artificial graphite particles, and a nitrogen element, an oxygen element, and a hydrogen element. The nitrogen element, the oxygen element, and the hydrogen element may be present or doped in the artificial graphite particles. The nitrogen element is included in the negative electrode active material in a specific amount. An amount range of the nitrogen element present in the negative electrode active material may be interpreted as an indicator of a graphitization degree of a surface of the negative electrode active material. According to the present invention, the graphitization degree of the surface of the negative electrode active material may be lowered to an appropriate level by adjusting the amount of the nitrogen element present in the negative electrode active material to a specific range. Accordingly, the negative electrode active material according to the present invention may be prevented or suppressed from being exfoliated due to an organic solvent included in a non-aqueous electrolyte, and at the same time, may exhibit a required level of discharge capacity.

BRIEF DESCRIPTION OF THE DRAWINGS

The following drawings attached to the specification illustrate embodiments of the present invention, and together with the detailed description of the disclosure described below, serve to further understand the technical idea of the present invention, so that the present invention should not be interpreted as being limited to matters described in such drawings.

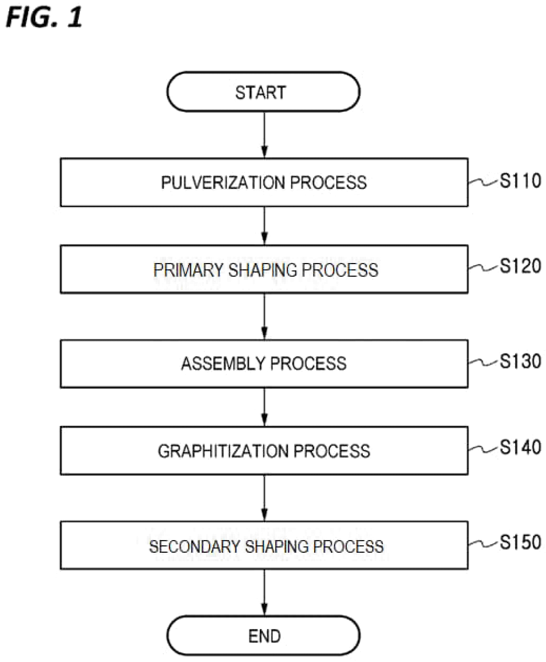

FIG. 1 is a flowchart explaining an artificial graphite preparation process according to an embodiment of the present invention.

MODE FOR CARRYING OUR THE INVENTION

Terms or words used in the specification and the claims should not be construed as being limited to general and dictionary meanings, but should be interpreted as the meanings and concepts corresponding to the technical idea of the present invention based on the principle that the inventor is allowed to define terms appropriately in order to explain his/her invention in the best way possible.

The terms used in the present specification are used only to describe exemplary embodiments rather than limiting the present invention. Singular forms are intended to include plural forms unless otherwise indicated contextually.

In the specification, the terms "comprise," "include," or "have" are intended to specify the presence of implemented features, numbers, steps, components, or combinations thereof, but should be understood as not excluding in advance the possibility of the presence or addition of one or more other features, numbers, steps, components, or combinations thereof.

In the specification, an average particle diameter ($D_{50}$) may be defined as a particle diameter corresponding to 50% of a volume accumulation amount in a particle diameter distribution curve of particles. The average particle diameter ($D_{50}$) may be measured using, for example, a laser diffraction method. The laser diffraction method generally allows for the measurement of a particle diameter ranging from a submicron level to several millimeters (mm) and may obtain a result having high reproducibility and high resolution.

In the specification, a 'primary particle' means a single particle, and a 'secondary particle' means an aggregate in which a plurality of primary particles are aggregated by an intentional assembly or bonding process.

As used in the specification, "about", "approximately", and "substantially" are used as a category of a numerical value or degree or a meaning close thereto, in consideration of inherent manufacturing and material tolerances.

A lithium secondary battery is configured to include a positive electrode, a negative electrode, a separator, and an electrolyte. The positive electrode and the negative electrode are prepared by mixing a positive electrode active material and a negative electrode active material with a binder, respectively, dispersing them in a solvent to prepare a slurry, applying the slurry to a surface of an electrode current collector, and drying the slurry to form an electrode active material layer.

As for the negative electrode active material, a carbonaceous active material, which allows reversible intercalation and deintercalation of lithium ions and maintains structural characteristics and electrical properties, may be used. As for the carbonaceous active material, various types of carbonaceous materials, such as artificial graphite, natural graphite, and hard carbon, have been used. Among these, a graphite-based active material capable of ensuring the life characteristics of lithium secondary batteries by virtue of high reversibility, has been used widely. Since the graphite-based active materials have a relatively low discharge voltage of -0.2 V compared to lithium, batteries using the graphite-based active materials may exhibit a high discharge voltage of about 3.6 V, for example, and thus, provide many advantages in terms of the energy density of lithium batteries.

Among the carbon-based active materials, artificial graphite has a relatively low orientation during electrode rolling compared to natural graphite and has good inflow/outflow properties of lithium ions, thereby having advantages in terms of excellent rapid charge performance of a battery, and excellent life characteristics thereof due to a low degree of expansion caused by charge and discharge. The artificial graphite is prepared by heat-treating amorphous carbon such as coke at a high temperature (e.g., 2,500 °C to 3,200 °C), and is distinguished from natural graphite in that the artificial graphite is artificially synthesized graphite. The artificial graphite has a high degree of graphitization due to the heat treatment at a high temperature and is defective in that its surface is exfoliated when in contact with an organic solvent (e.g., ethyl methyl carbonate) in a non-aqueous electrolyte. The surface exfoliation of artificial graphite may cause various defects such as an increase in electrolyte side reactions, low initial efficiency, loss of energy density, and gas generation. Meanwhile, when a graphitization degree of artificial graphite is excessively lowered to prevent or suppress such defects, capacity itself may be reduced.

Hereinafter, the present invention will be described in detail below.

## Negative Electrode Active Material

The present invention relates to a negative electrode active material, for example, a negative electrode active material for a lithium secondary battery.

The negative electrode active material includes artificial graphite particles; and a nitrogen element (N), an oxygen element (O), and a hydrogen element (H) present on a surface, at an inside, or on the surface and at the inside of the artificial graphite particle, and the nitrogen element is included in an amount of about 80 mg to 180 mg per 1 kg of the negative electrode active material.

The negative electrode active material according to the present invention includes the artificial graphite particles, the nitrogen elements, the oxygen elements, and the hydrogen elements. The nitrogen element, the oxygen element, and the hydrogen element may be present or doped in the artificial graphite particles. The nitrogen element is included in the negative electrode active material in a specific amount. An amount range of the nitrogen element present in the negative electrode active material may be interpreted as an indicator of a graphitization degree of a surface of the negative electrode active material. According to the present invention, the graphitization degree of the surface of the negative electrode active material may be lowered to an appropriate level by adjusting the amount of the nitrogen element present in the negative electrode active material to a specific range. Accordingly, the negative electrode active material according to the present invention may be prevented or suppressed from being exfoliated due to an organic solvent included in a non-aqueous electrolyte, and at the same time, may exhibit a required level of discharge capacity.

In general, graphite may be artificially prepared through a series of complex processes that transform raw materials into highly organized crystal structures. For example, in order to prepare such artificial graphite, coke and graphite are pulverized and mixed with a binder (e.g., pitch) to form a homogeneous mass, and then, the mixture may be shaped using techniques such as isotropic pressing, extrusion, or die molding. Subsequently, the shaped material is subjected to a carbonization process in an oxygen-free environment at about 1,000 °C, and in the next step of a graphitization process, the material is heat-treated by heating the material to a temperature of about 2500 °C to 3200 °C in an inert atmosphere, so that amorphous or non-crystalline carbon is partially or completely converted into graphite. The graphitization process in an artificial graphite preparation process is one of a major process of a carbon-graphite process. For example, a high-temperature treatment in the graphitization process allows for alignments of carbon atoms in a characteristic layer structure of graphite, thereby improving properties such as strength and conductivity. The graphitization degree is a measure for determining the degree of closeness to a hexagonal graphite crystal structure where carbon atoms are densely disposed. An ideal graphite crystal structure is represented by a dense hexagonal arrangement with lattice constants a=0.2461 nm and c=0.6708 nm. In general, as the lattice dimensions are closer to ideal graphite lattice constants, it is considered that the graphitization degree is higher.

The negative electrode active material includes the artificial graphite particles. The artificial graphite particles are prepared by heat-treating the amorphous carbon at a high temperature (e.g., 2,500 °C to 3,200 °C), and are distinguished from natural graphite in that the artificial graphite particles are artificially synthesized graphite.

The artificial graphite particles may be in the form of primary particles or in the form of secondary particles in which two or more primary particles are assembled. For example, the artificial graphite particles may be in the form of secondary particles in which two or more primary particles are assembled. The primary particles included in the artificial graphite particles may mean artificial graphite in the form of primary particles.

When the artificial graphite particles are in the form of secondary particles, pores may be formed within the artificial graphite particles. The pores may be empty spaces formed between the primary particles and may be amorphous, and two or more pores may be present therein.

When the artificial graphite particles are in the form of secondary particles, the artificial graphite particles may be prepared by a method of mixing artificial graphite particles in the form of primary particles with a binder material (e.g., pitch), and performing mechanical milling, shaping or spheroidization, and heat-treatment thereon to aggregate the artificial graphite particles in the form of primary particles into secondary particles. Alternatively, when the artificial graphite particles are in the form of secondary particles, the artificial graphite particles may be prepared, by mixing a carbon precursor and a binder material, performing mechanical milling (or shaping) and an assembly process to manufacture an intermediate in the form of secondary particles, and heat-treating the intermediate at a temperature of 3,000 °C or more to graphitize the intermediate. In this case, the carbon precursor may be coal-derived heavy oil, petroleum-derived heavy oil, tar, pitch, or coke, and may be, for example, at least one selected from the group consisting of needle coke, mosaic coke, and coal tar pitch. The preparation method is not particularly limited, as long as the amount range of the nitrogen element present in the negative electrode active material is satisfied.

The negative electrode active material may include the nitrogen element, the oxygen element, and the hydrogen element present on the surface, at the inside, or on the surface and at the inside of the artificial graphite particle. According to an embodiment of the present invention, the nitrogen element, the oxygen element, and the hydrogen element may be doped in the artificial graphite particles.

In the present invention, the amount of the nitrogen element present in the artificial graphite particle may be about 80 mg to 180 mg per 1 kg of the negative electrode active material.

The nitrogen element, the oxygen element, and the hydrogen element may be introduced or present in the artificial graphite particles during, for example, a process of preparing the artificial graphite particles, such as a pulverization process, a mechanical milling process, or an assembly process. Typically, the nitrogen element is generally removed or present at a low amount level during the process of preparing the artificial graphite particles, for example, the graphitization process. Meanwhile, when graphitization of artificial graphite is sufficiently performed as much as necessary, the amount of the nitrogen element included in the artificial graphite particle becomes substantially low. In this case, a surface exfoliation of the artificial graphite may occur in a process in which an electrolyte component such as ethyl methyl carbonate (EMC) is impregnated and introduced into the artificial graphite. The surface exfoliation of the artificial graphite generates a side reaction between the non-aqueous electrolyte and the surface of the artificial graphite, and causes a problem in which an organic solvent in the non-aqueous electrolyte is continuously consumed. Meanwhile, in order to prevent the problem, when a graphitization degree of the entire artificial graphite is lowered, the discharge capacity itself decreases, making it difficult to achieve a target energy density.

In this regard, in the present invention, the electrolyte side reactions are prevented or suppressed, and the discharge capacity has been improved by adjusting the amount of nitrogen element present in the artificial graphite particle to a specific range. The reason for exhibition of such effects is understood to be that, when the amount of the nitrogen element present or introduced during the graphitization process of the artificial graphite particles satisfies a specific range, the graphitization degree of surfaces of the artificial graphite particles is reduced to an appropriate level, and thus, the surface exfoliation due to the organic solvent in the non-aqueous electrolyte is significantly reduced. In addition, the negative electrode active material according to the present invention may prevent or suppress the electrolyte side reactions without lowering the graphitization degree of the entire artificial graphite particles, and thus, may implement a high level of discharge capacity.

When the amount of the nitrogen element present in the artificial graphite particle is adjusted to a specific range, local electrochemical active sites are generated according to doping of the nitrogen elements, so that improvements in rapid charge performance of the negative electrode active material may also be expected.

According to the embodiment, the amount of the nitrogen element included in the artificial graphite particle may be about 80 mg to 180 mg, for example, about 100 mg to 170 mg, or about 110 mg to 160 mg, or about 120 mg to 140 mg, per 1 kg of the negative electrode active material. Within this range, the effect of improving initial efficiency and discharge capacity, and the effect of preventing electrolyte side reactions, may be exhibited at a more excellent level.

In the present invention, the amount of the oxygen element present in the negative electrode active material may be about 650 mg to 1,000 mg, for example, about 650 mg to 900 mg, or about 680 mg to 850 mg, or about 700 mg to 800 mg, per 1 kg of the negative electrode active material. In addition, the amount of the hydrogen element present in the negative electrode active material may be about 300 mg to 500 mg, for example, about 310 mg to 480 mg, or about 320 mg to 450 mg, or about 350 mg to 420 mg per 1 kg of the negative electrode active material.

A total weight of the nitrogen element, the oxygen element, and the hydrogen element present in the negative electrode active material may be about 1,000 mg to 1,600 mg, for example, about 1,050 mg to 1,500 mg, or about 1,110 mg to 1,460 mg, or about 1,200 mg to 1,400 mg per 1 kg of the negative electrode active material.

The ratio of a weight of the nitrogen element in the negative electrode active material to a weight of the oxygen element in the negative electrode active material may be about 0.12 or more, for example, 0.15 or more, or 0.16 or more. The ratio of the weight of the nitrogen element in the negative electrode active material to the weight of the oxygen element in the negative electrode active material may be, for example, about 0.20 or less, or about 0.19 or less. The ratio of the weight of the nitrogen element in the negative electrode active material to the weight of the oxygen element in the negative electrode active material may be about 0.12 to 0.20, for example, about 0.15 to 0.20, or about 0.16 to 0.19, or about 0.165 to 0.185.

The ratio of the weight of the hydrogen element in the negative electrode active material to the weight of the oxygen element in the negative electrode active material may be about 0.47 or more, for example, about 0.47 to 0.55, for example, about 0.48 to 0.51.

The ratio of a total weight of the nitrogen element and the hydrogen element in the negative electrode active material to the weight of the oxygen element in the negative electrode active material may be about 0.5 or more, for example, 0.55 or more, or 0.6 or more. The ratio of the total weight of the nitrogen element and the hydrogen element in the negative electrode active material to the weight of the oxygen element in the negative electrode active material may be about 0.75 or less. For example, the ratio of the total weight of the nitrogen element and the hydrogen element in the negative electrode active material to the weight of the oxygen element in the negative electrode active material may be about 0.5 to 0.75, for example, 0.6 to 0.72, or 0.65 to 0.70.

Through the amounts of the nitrogen elements, the oxygen elements, and the hydrogen elements, and the relationship between the amounts thereof, the effects of improving the initial efficiency and discharge capacity and the effect of preventing or suppressing electrolyte side reactions, may be implemented.

The amounts of the nitrogen elements, the oxygen elements, and/or the hydrogen elements may be measured using an ONH analyzer. For example, 0.1 g of a negative electrode active material sample may be put in a crucible and introduced into an ONH analyzer, to measure the amounts of the nitrogen elements, the oxygen elements, and/or the hydrogen elements. For example, the ONH analyzer may be a NOH836 analyzer (LECO Korea Co., Ltd.). For the amounts of the nitrogen elements, the oxygen elements and/or the hydrogen elements, three identical negative electrode active material samples are prepared and analyzed three times using the ONH analyzer, and then, an average value obtained therefrom may be defined as the amount of the nitrogen elements, the oxygen elements and/or hydrogen elements.

In the present invention, the amounts of the nitrogen element, the oxygen element, and the hydrogen element present in the negative electrode active material may be adjusted by controlling the conditions of a preparation process of the artificial graphite particles, for example, a pulverization process, a shaping process by, for example, a mechanical milling, an assembly process, a graphitization process, and an additional shaping process. According to the embodiment, for the negative electrode active material according to the present invention, an additional shaping process, such as a mechanical milling or spheroidization process, is performed after the graphitization process for preparing the artificial graphite particles, while controlling the mechanical milling or spheroidization conditions at this time, so that the amounts of the nitrogen element, the oxygen element, and the hydrogen element present in the negative electrode active material may be adjusted. In this case, the mechanical milling or spheroidization conditions may be controlled in consideration of, for example, the size of a reactor or the weight of a precursor to be introduced.

FIG. 1 is a flowchart explaining an artificial graphite preparation process 100 according to an embodiment of the present invention.

In step S110, a pulverization process is first performed to pulverize coke, which is a raw material of artificial graphite, into a desired size. In the process, the size of the coke is adjusted by adjusting the round per minute (RPM) of milling equipment, such as an air classifier mill, a roll mill, or a hammer mill.

In step S120, a primary shaping process is performed. In the primary shaping process, a surface of the coke, which has been reduced to a desired size through the previous pulverization process, is made smooth without uneven portions, and is also formed in a non-pointed shape. In the primary shaping process, the same equipment as that of the pulverization process, or different equipment therefrom, may be used.

In step S130, an assembly process is performed. For artificial graphite, the assembly process is a process of preparing secondary particles formed by agglomerating multiple primary particles, using additives such as pitch in primary particles which have been prepared by pulverizing coke. The assembly process is performed using a vertical granulator or a horizontal granulator, which is an equipment for mixing primary particles, which are pulverized coke, with an additive such as pitch, and a mixing ratio with the additive may be adjusted to form a desired particle diameter by adjusting the RPM of the equipment.

In step S140, the graphitization process is performed. According to the embodiment, an Acheson furnace is used in the graphitization process to heat-treat coke at a temperature of, for example, about 3,000 °C to generate graphite.

In step S150, a secondary shaping process, which is an additional shaping process that may artificially damage the surface of the graphite, is performed. In the secondary shaping process, the equipment used in the previously performed shaping and pulverization processes may be used. However, the RPM or process time is significantly reduced compared to the previously performed shaping and pulverization processes, thereby conducting, for example, relatively weak milling.

The graphitization degree of the negative electrode active material may be about 90% to 99%, for example, about 92% to 99%, or about 92% to 96%, or about 92% to 94%. When the graphitization degree falls within the above range, the graphitization degree of the entire negative electrode active material may be increased to a certain level to secure an excellent initial efficiency and discharge capacity, while preventing or suppressing the electrolyte side reactions due to the surface exfoliation of the negative electrode active material.

The graphitization degree of the negative electrode active material may be calculated by measuring an interplanar spacing d002 of graphite (002) plane obtained through the Bragg's Law from XRD data.

For example, the graphitization degree may be derived from Equation 1 below.

[Equation 1]

$$\text{Graphitization degree (\%)} = (3.44 - d002)/(0.086) \times 100$$

In Equation 1, d002 is an interplanar spacing (nm) of (002) plane of the artificial graphite particle present in the negative electrode active material.

The average particle diameter ($D_{50}$) of the negative electrode active material may be about 10 $\mu$m to 30 $\mu$m, for example, about 12 $\mu$m to 25 $\mu$m.

A BET (Brunauer, Emmett, Teller) specific surface area of the negative electrode active material may be about 1 $m^2$/g to 8 $m^2$/g, for example, about 1.2 $m^2$/g to 5 $m^2$/g, or about 1.4 $m^2$/g to 3.2 $m^2$/g, or about 1.6 $m^2$/g to 2.5 $m^2$/g. When the BET specific surface area falls within the above range, a movement path of lithium ions is readily secured, so that excellent initial efficiency and discharge capacity may be exhibited, and the effect of improving electrolyte side reactions according to a reduction in the graphitization degree of the surface of the negative electrode active material may be implemented. The BET specific surface area may be measured, for example, using the BEL Sorption instruments (BEL Japan Inc.).

The negative electrode active material may further include an amorphous carbon coating layer located on the surface of the artificial graphite particle. The amorphous carbon coating layer may contribute to improving the structural stability of the artificial graphite particles and preventing or suppressing the side reactions between the negative electrode active material and an electrolyte solution.

The amorphous carbon coating layer may be formed in an amount of about 0.1 wt% (% by weight) to 10 wt%, for example, about 1 wt% to 5 wt%, based on a total weight of the negative electrode active material. The presence of the amorphous carbon coating layer may improve the structural stability of the negative electrode active material. In the meantime, an excessive formation of the amorphous carbon coating layer may cause a decrease in initial efficiency due to an increase in the specific surface area during negative electrode rolling and may cause a decrease in high-temperature storage performance. Therefore, the carbon coating layer may be formed in the amount within the above range.

The amorphous carbon coating layer may be formed by providing a carbon coating layer precursor to the artificial graphite particles and then performing heat treatment thereon.

The carbon coating layer precursor may include at least one selected from the group consisting of a polymer resin and pitch. For example, the polymer resin may include at least one selected from the group consisting of sucrose, phenol resin, naphthalene resin, polyvinyl alcohol resin, furfuryl alcohol resin, polyacrylonitrile resin, polyamide resin, furan resin, cellulose resin, styrene resin, polyimide resin, epoxy resin, vinyl chloride resin, and polyvinyl chloride. The pitch may include at least one selected from the group consisting of coal-derived pitch, petroleum-derived pitch, and mesophase pitch. A heat treatment process for forming the amorphous carbon coating layer may be performed at about 1,000 °C to 1,500 °C in order to promote a uniform formation of the amorphous carbon coating layer.

**Negative Electrode**

The present invention provides a negative electrode, for example, a negative electrode for a lithium secondary battery. The negative electrode may include the negative electrode active material described above.

According to the embodiment, the negative electrode may include a negative electrode current collector; and a negative electrode active material layer disposed on at least one surface of the negative electrode current collector. The negative electrode active material layer may include the negative electrode active material described above.

As for the negative electrode current collector, any negative electrode current collector commonly used in the art may be used without limitation, as long as it has high conductivity without causing a chemical change in the lithium secondary battery. For example, the negative electrode current collector may include at least one selected from the group consisting of copper, stainless steel, aluminum, nickel, titanium, calcined carbon, and an aluminum-cadmium alloy, and may be copper, according to an embodiment.

The negative electrode current collector may form fine unevenness on a surface to strengthen the bonding force of the negative electrode active material, and may be used in various forms such as a film, a sheet, a foil, a net, a porous body, a foamed body, and a non-woven fabric.

The negative electrode current collector may usually have a thickness of about 3 $\mu$m to 500 $\mu$m.

The negative electrode active material layer is disposed on at least one surface of the negative electrode current collector. For example, the negative electrode active material layer may be disposed on one surface or both surfaces of the negative electrode current collector.

The negative electrode active material layer may include the negative electrode active material described above.

The negative electrode active material layer may further include a silicon-based active material, together with the negative electrode active material described above.

The silicon-based active material may include, for example, at least one of silicon (Si), silicon oxide ($SiO_x$, 0<x<2), and a silicon-carbon composite.

The negative electrode active material or a mixture of the negative electrode active material and the silicon-based active material may be included in the negative electrode active material layer in an amount of about 80 wt% to 99 wt%, for example, about 88 wt% to 98 wt%.

The explanation of the negative electrode active material is as described above.

The negative electrode active material layer may further include a binder, a conductive material, and/or a thickener, in addition to the negative electrode active material described above.

The binder is a component that assists in bonding between an active material and/or a current collector, and may typically be included in the negative electrode active material layer in an amount of about 1 wt% to 30 wt%, for example, about 1 wt% to 10 wt%.

The binder may include at least one selected from the group consisting of polyvinylidene fluoride (PVDF), polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene polymer (EPDM), sulfonated-EPDM, styrene-butadiene rubber, and fluoro-rubber, for example, at least one selected from the group consisting of polyvinylidene fluoride and styrene-butadiene rubber.

As for the thickener, any thickener used in conventional lithium secondary batteries may be used, and an example of the thickener includes carboxymethyl cellulose (CMC).

The conductive material is a component for further improving conductivity of the negative electrode active material, and may be included in the negative electrode active material layer in an amount of about 1 wt% to 30 wt%, for example, about 1 wt% to 10 wt%.

The conductive material is not particularly limited as long as it has conductivity without causing a chemical change in a battery. As for the conductive material, for example, graphite, such as natural graphite or artificial graphite; carbon black such as acetylene black, Ketjen black, channel black, furnace black, lamp black, or thermal black; conductive fibers such as carbon fibers or metal fibers; metal powder such as nickel powder, or aluminum powder; fluorinated carbon; conductive whisker such as zinc oxide or potassium titanate; a conductive metal oxide such as titanium oxide; and conductive materials such as polyphenylene derivatives, may be used. Examples of commercially available conductive materials include acetylene black series such as products manufactured by Chevron chemical company or Denka black manufactured by Denka Singapore private limited, products manufactured by Gulf Oil company, Ketjen black, EC series manufactured by Armak company, Vulcan XC-72 manufactured by Cabot company, and Super P manufactured by Timcal company.

The thickness of the negative electrode active material layer may be about 10 $\mu$m to 300 $\mu$m, for example, about 50 $\mu$m to 200 $\mu$m, but is not limited thereto.

The negative electrode active material layer may be manufactured by applying a negative electrode slurry, that has been prepared by selectively adding the negative electrode active material, optionally, the binder, the thickener, and/or the conductive material to a solvent, to the negative electrode current collector, and then, by rolling and drying the negative electrode slurry applied to the negative electrode current collector. At this time, the solvent may include water or an organic solvent such as NMP (N-methyl-2-pyrrolidone), and may be, for example, water.

## Secondary Battery

The present invention provides a secondary battery including the negative electrode described above, and provides, for example, a lithium secondary battery.

The secondary battery may include the negative electrode; a positive electrode disposed to face the negative electrode; a separator interposed between the negative electrode and the positive electrode; and an electrolyte.

The positive electrode may face the negative electrode.

The positive electrode may include a positive electrode current collector; and a positive electrode active material layer disposed on the positive electrode current collector.

As for the positive electrode current collector, any positive electrode current collector commonly used in the art may be used without limitation, as long as it has a relatively high conductivity without causing a chemical change in the lithium secondary battery. For example, the positive electrode current collector may include at least one selected from the group consisting of copper, stainless steel, aluminum, nickel, titanium, calcined carbon, and an aluminum-cadmium alloy, and may be aluminum, according to an embodiment.

The positive electrode current collector may form fine unevenness on a surface to strengthen a bonding force of the positive electrode active material, and may be used in various forms such as a film, a sheet, a foil, a net, a porous body, a foamed body, and a non-woven fabric.

The positive electrode current collector may usually have a thickness of about 3 $\mu$m to 500 $\mu$m.

The positive electrode active material layer may include a positive electrode active material.

The positive electrode active material is a compound that allows reversible intercalation and deintercalation of lithium ions, and may include, for example, a lithium composite metal oxide including lithium and at least one metal such as cobalt, manganese, nickel, or aluminum. According to the embodiment, the lithium composite metal oxide may be a lithium-manganese oxide (e.g., $LiMnO_2$ or $LiMn_2O_4$), a lithium-cobalt oxide (e.g., $LiCoO_2$), a lithium-nickel oxide (e.g., $LiNiO_2$), a lithium-nickel-manganese oxide (e.g., $LiNi_{1-Y}Mn_YO_2$ (where 0<Y<1), or $LiMn_{2-z}Ni_zO_4$ (where 0<z<2)), a lithium-nickel-cobalt oxide (e.g., $LiNi_{1-Y1}Co_{Y1}O_2$ (where 0<Y1<1)), a lithium-manganese-cobalt oxide (e.g., $LiCo_{1-Y2}Mn_{Y2}O_2$ (where 0<Y2<1) or $LiMn_{2-z1}Co_{z1}O_4$ (where 0<Z1<2)), a lithium-nickel-manganese-cobalt oxide (e.g., $Li(Ni_pCo_qMn_{r1})O_2$ (where 0 < p < 1, 0 < q < 1, 0 < r1 < 1, p+q+r1=1) or $Li(Ni_{p1}Co_{q1}Mn_{r2})O_4$ (where 0 < p1 < 2, 0 < q1 < 2, 0 < r2 < 2, p1+q1+r2=2)), or a lithium-nickel-cobalt-transition metal (M) oxide (e.g., $Li(Ni_{p2}Co_{q2}Mn_{r3}M_{S2})O_2$ (where M is selected from the group consisting of Al, Fe, V, Cr, Ti, Ta, Mg and Mo, and p2, q2, r3 and s2 are atomic fractions of independent elements, 0 < p2 < 1, 0 < q2 < 1, 0 < r3 < 1, 0 < s2 < 1, p2+q2+r3+s2=1)), and the lithium composite metal oxide may include one or more compounds among these oxides. Among these, the lithium composite metal oxide may be $LiCoO_2$, $LiMnO_2$, $LiNiO_2$, a lithium nickel manganese cobalt oxide (for example, $Li(Ni_{0.6}Mn_{0.2}Co_{0.2})O_2$, $Li(Ni_{0.5}Mn_{0.3}Co_{0.2})O_2$, or $Li(Ni_{0.8}Mn_{0.1}Co_{0.1})O_2$) or a lithium nickel cobalt aluminum oxide (for example, $Li(Ni_{0.8}Co_{0.15}Al_{0.05})O_2$), in terms of improving capacity characteristics and stability of a battery. Considering the prominence of improvement effects according to a control of types and amount ratio of elements forming the lithium composite metal oxide, the lithium composite metal oxide may be $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$ or $Li(Ni_{0.8}Mn_{0.1}Co_{0.1})O_2$, and one or a mixture of two or more thereof may be used.

The positive electrode active material may be included in the positive electrode active material layer in an amount of about 80 wt% to 99 wt%.

The positive electrode active material layer may further include at least one selected from the group consisting of the binder and the conductive material, together with the positive electrode active material.

The binder is a component that assists in bonding of the active material and the conductive material and bonding to the current collector and is typically added in an amount of 1 to 30 wt% based on a total weight of a positive electrode mixture. Examples of the binder may include at least one selected from the group consisting of polyvinylidene fluoride (PVDF), polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene terpolymer (EPDM), sulfonated-EPDM, styrene-butadiene rubber, and fluoro-rubber.

The binder may be included in the positive electrode active material layer in an amount of about 1 wt% to 30 wt%.

The conductive material is not particularly limited as long as it has conductivity without causing a chemical change in a battery. As for the conductive material, for example, graphite such as natural graphite or artificial graphite; carbon black such as acetylene black, Ketjen black, channel black, furnace black, lamp black, or thermal black; conductive fibers such as carbon fibers or metal fibers; metal powder such as nickel powder, or aluminum powder; fluorinated carbon; conductive whisker such as zinc oxide or potassium titanate; a conductive metal oxide such as titanium oxide; and conductive materials such as polyphenylene derivatives, may be used. Examples of commercially available conductive materials include acetylene black series such as products manufactured by Chevron chemical company or Denka black manufactured by Denka Singapore private limited, products manufactured by Gulf Oil company, Ketjen black, EC series manufactured by Armak company, Vulcan XC-72 manufactured by Cabot company, and Super P manufactured by Timcal company.

The conductive material may be added into the positive electrode active material layer in an amount of about 1 wt% to 30 wt%.

The separator separates the negative electrode and the positive electrode, and provides a movement path for lithium ions. Those commonly used as a separator in lithium secondary batteries may be used without any particular limitation, and for example, those having an excellent electrolyte moisture retention ability while having low resistance for ion migration of an electrolyte solution, may be used. According to the embodiment, porous polymer films, for example, porous polymer films prepared with a polyolefin-based polymer such as an ethylene homopolymer, a propylene homopolymer, an ethylene/butene copolymer, an ethylene/hexene copolymer and an ethylene/methacrylate copolymer may be used either alone or a laminated structure of two or more layers thereof, may be used. In addition, common porous non-woven fabrics, for example, non-woven fabrics made of high melting point glass fiber or polyethylene terephthalate fiber may be used. In addition, a coated separator including a ceramic component or a polymer material to secure heat resistance or mechanical strength, may be used, and may be optionally used in a single-layer structure or multilayer structure.

The electrolyte used in the present invention may include an organic liquid electrolyte, an inorganic liquid electrolyte, a solid polymer electrolyte, a gel-type polymer electrolyte, a solid inorganic electrolyte, a molten inorganic electrolyte that may be used in the manufacture of a lithium secondary battery, but is not limited thereto.

For example, the electrolyte may include an organic solvent and a lithium salt.

The organic solvent may be used without any particular limitation as long as the organic solvent may act as a medium through which ions involved in electrochemical reactions of the battery may move. For example, as the organic solvent, an ester-based solvent such as methyl acetate, ethyl acetate, $\gamma$-butyrolactone, or $\varepsilon$-caprolactone; an ether-based solvent such as dibutyl ether, or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methylethyl carbonate (MEC), ethylmethyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bond, aromatic ring or an ether bond); an amide-based solvent such as dimethylformamide; a dioxolane-based solvent such as 1,3-dioxolane; or a sulfolane-based solvent may be used. According to the embodiment, among these, a carbonate-based solvent may be used, and a mixture of a cyclic carbonate having high ion conductivity and high permittivity (for example, ethylene carbonate, or propylene carbonate) and a low-viscosity linear carbonate-based compound (for example, ethyl methyl carbonate, dimethyl carbonate, or diethyl carbonate) may be used, said mixture being able to increase the charge/discharge performance of a battery. In this case, by using a mixture of a cyclic carbonate and a linear carbonate in a volume ratio of about 1:1 to about 1:9, the electrolyte solution may exhibit excellent performance.

The lithium salt may be used without any particular limitation as long as it is a compound capable of providing lithium ions used in a lithium secondary battery. For example, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$. The concentration of the lithium salt may be within a range of about 0.1 to 2.0 M. When the concentration of the lithium salt is within the above range, the electrolyte may have appropriate conductivity and viscosity, and thus, exhibit excellent electrolyte performance, and lithium ions may move effectively.

Since the lithium secondary battery according to the present invention stably exhibits excellent discharge capacity, rapid charge characteristics and a capacity retention, it is useful in portable devices such as a mobile phone, a laptop computer, or a digital camera, and the field of an electric automobile such as a hybrid electric vehicle (HEV). For example, the lithium secondary battery may be used as a constituent battery for medium-to-large battery modules. Accordingly, the present invention provides medium-to-large battery modules including the above-described secondary battery as a unit battery.

The medium-to-large battery modules may be applied as a power source for electric vehicles, hybrid electric vehicles, or electric power storage devices requiring a relatively high power and a relatively large capacity.

Hereinafter, examples of the present invention will be described in detail so that those skilled in the art may easily practice the present invention. However, the present invention may be implemented in various different forms, and is not limited to the examples described herein.

## Examples and Comparative Examples

### Example 1

Coke raw materials were pulverized and subjected to air classification and mechanical milling, to prepare carbon precursors in the form of primary particles. Then, the carbon precursors and pitch were mixed, and placed in an assembly facility having blades therein and subjected to mechanical milling at 400 °C to 800 °C while being mixed, thereby manufacturing an intermediate in the form of secondary particles. The intermediate was heat-treated at 3,000 °C for 2 hours in a graphitization furnace with a capacity of about 100 kg to graphitize the intermediate.

The product obtained after the graphitization was subjected to additional mechanical milling at room temperature at a speed of 30 Hz in the assembly facility. Through this, artificial graphite particles in the form of secondary particles in which two or more primary artificial graphite particles were assembled, were prepared, and the artificial graphite particle was used as a negative electrode active material.

The average particle diameter ($D_{50}$) of the negative electrode active material was 17 $\mu$m, and the BET specific surface area thereof was 1.4 m$^2$/g.

**Example 2**

A negative electrode active material was prepared in the same manner as in Example 1, except that additional mechanical milling after the graphitization was performed at room temperature under a speed condition of 40 Hz, which is higher than the 30 Hz of Example 1 described above.
The average particle diameter ($D_{50}$) of the negative electrode active material was 16 $\mu$m, and the BET specific surface area thereof was 1.8 m$^2$/g.

**Example 3**

A negative electrode active material was prepared in the same manner as in Example 1, except that additional mechanical milling after the graphitization was performed at room temperature under a speed condition of 50 Hz, which is higher than the 40 Hz of Example 2 described above.
The average particle diameter ($D_{50}$) of the negative electrode active material was 15 $\mu$m, and the BET specific surface area thereof was 3.2 m$^2$/g.

**Comparative Example 1**

A negative electrode active material was prepared in the same manner as in Example 1, except that additional mechanical milling after the graphitization was not performed.
The average particle diameter ($D_{50}$) of the negative electrode active material was 19 $\mu$m, and the BET specific surface area thereof was 1.2 m$^2$/g.

**Comparative Example 2**

A negative electrode active material was prepared in the same manner as in Example 1, except that the heat treatment time during the graphitization was adjusted to 3 hours and additional mechanical milling after the graphitization was not performed.
The average particle diameter ($D_{50}$) of the negative electrode active material was 19 $\mu$m, and the BET specific surface area thereof was 1.0 m$^2$/g.

**Comparative Example 3**

A negative electrode active material was prepared in the same manner as in Example 1, except that the heat treatment time during the graphitization was adjusted to 1 hour and additional mechanical milling after the graphitization was not performed.
The average particle diameter ($D_{50}$) of the negative electrode active material was 20 $\mu$m, and the BET specific surface area thereof was 3.5 m$^2$/g.

[Table 1]

| | Amount of Oxygen Elements (O) present in Negative Electrode Active Material (mg/kg, based on 1kg of Negative Electrode Active Material) | Amount of Nitrogen elements (N) present in Negative Electrode Active Material (mg/kg, based on 1kg of Negative Electrode Active Material) | Amount of Hydrogen elements (H) present in Negative Electrode Active Material (mg/kg, based on 1kg of Negative Electrode Active Material) | Graphitization Degree (%) | Average Particle Diameter ($D_{50}$) ($\mu$m) | BET Specific Surface Area (m$^2$/g) |
|---|---|---|---|---|---|---|
| Example 1 | 680 | 110 | 320 | 94 | 17 | 1.4 |
| Example 2 | 730 | 130 | 370 | 93 | 16 | 1.8 |
| Example 3 | 850 | 160 | 450 | 92 | 15 | 3.2 |
| Comparative Example 1 | 280 | 55 | 280 | 94 | 18 | 1.2 |

(continued)

|  | Amount of Oxygen Elements (O) present in Negative Electrode Active Material (mg/kg, based on 1kg of Negative Electrode Active Material) | Amount of Nitrogen elements (N) present in Negative Electrode Active Material (mg/kg, based on 1kg of Negative Electrode Active Material) | Amount of Hydrogen elements (H) present in Negative Electrode Active Material (mg/kg, based on 1kg of Negative Electrode Active Material) | Graphitization Degree (%) | Average Particle Diameter ($D_{50}$) ($\mu$m) | BET Specific Surface Area ($m^2/g$) |
|---|---|---|---|---|---|---|
| Comparative Example 2 | 220 | 35 | 220 | 98 | 18 | 1.0 |
| Comparative Example 3 | 1100 | 205 | 660 | 84 | 20 | 3.5 |

1) Analysis of Amounts of Nitrogen Elements, Oxygen Elements, and Hydrogen Elements

A negative electrode active material sample of 0.1 g was put in a crucible and introduced in an ONH analyzer (NOH836 analyzer of LECO Korea Co., Ltd.) to measure the amount of the nitrogen element, the oxygen element, and/or the hydrogen element. Three samples of each of Examples and each of Comparative Examples were prepared, and a measurement test thereof was performed three times, and average values obtained therefrom were recorded in Table 1.

2) Graphitization Degree

The graphitization degree of the negative electrode active material was calculated according to the Equation 1 above, by measuring the interplanar spacing d002 of the graphite (002) plane obtained through the Bragg's Law from XRD data.

3) Average Particle Diameter ($D_{50}$)

The average particle diameter ($D_{50}$) of the negative electrode active material was calculated by obtaining a particle diameter distribution curve of particles using a laser diffraction method, and then, by calculating a particle diameter corresponding to 50% of a volume accumulation amount in the particle diameter distribution curve. The particle diameter corresponding to 50% of the volume accumulation amount was defined as the average particle diameter ($D_{50}$) of the negative electrode active material.

4) BET Specific Surface Area

The BET specific surface area of the negative electrode active material was measured using a BEL Sorption instruments (BEL Japan Inc.).

Experimental Example

Experimental Example 1: Initial Efficiency and Discharge Capacity Evaluation

(Manufacture of Lithium Secondary Battery)

In order to prepare a negative electrode slurry, the negative electrode active material prepared according to the Example 1, carbon black as a conductive material, styrene-butadiene rubber as a binder, and CMC as a thickener were added to water serving as a solvent at a weight ratio of 95.6:1.0:1.1:2.3. The negative electrode slurry was applied to a copper current collector, dried at 130 °C, and rolled to manufacture a negative electrode.
A lithium metal was prepared as a counter electrode for the negative electrode.
A porous polyethylene separator was interposed between the negative electrode and the lithium metal counter electrode, to manufacture an electrode assembly. The electrode assembly was positioned inside a case, and a non-aqueous electrolyte was injected into the inside of the case, and the case was sealed to manufacture a lithium secondary battery of Example 1.

As the non-aqueous electrolyte, a non-aqueous electrolyte in which $LiPF_6$ was dissolved at a concentration of 1.0 M in an organic solvent containing ethylene carbonate (EC) and ethyl methyl carbonate (EMC) in a volume ratio of 20:80, was used.

Lithium secondary batteries of Examples 2 to 3 and Comparative Examples 1 to 3 were prepared in the same manner as in Example 1, except for using the negative electrode active materials of Examples 2 to 3 and Comparative Examples 1 to 3.

(Evaluation of Initial Efficiency and Discharge Capacity)

The lithium secondary batteries of Examples 1 to 3 and Comparative Examples 1 to 3 prepared above were charged at 25 °C in CC/CV mode at 0.1C (0.005 V, 0.005C cut-off), and discharged at 0.1C in CC mode to confirm the initial efficiency and discharge capacity.

The results thereof are illustrated in Table 2 below.

[Table 2]

|  | Initial Efficiency (%) | Discharge Capacity (mAh/g) |
|---|---|---|
| Example 1 | 91.2 | 347 |
| Example 2 | 93.8 | 350 |
| Example 3 | 92.2 | 345 |
| Comparative Example 1 | 88.6 | 336 |
| Comparative Example 2 | 78.3 | 343 |
| Comparative Example 3 | 84.2 | 320 |

Referring to Table 2, it may be confirmed that the lithium secondary batteries of the Examples 1 to 3 including the negative electrode active material according to the present invention has superior initial efficiency and discharge capacity, compared to the Comparative Examples 1 to 3. For example, the initial efficiencies of Examples 1, 2, and 3 are 91.2%, 93.8%, and 92.2%, respectively, which are higher than 88.6%, 78.3%, and 84.2% of the Comparative Examples 1, 2, and 3. In the case of discharge capacity, the Examples 1, 2, and 3 exhibited 347 mAh/g, 350 mAh/g, and 345 mAh/g, respectively, which are higher than 336 mAh/g, 343 mAh/g, and 320 mAh/g of the Comparative Examples 1, 2, and 3.

While the above has been described with reference to the embodiments of the present invention, it will be understood by those skilled in the art or having ordinary knowledge of the art that various modifications and changes can be made to the present invention without departing from the technical scope of various embodiments of the present invention described in the claims to be described later, which will be described below. Accordingly, the technical scope of the present invention is not limited to what is described in the detailed description of the specification but should be defined by the patent claims.

**Claims**

1. A negative electrode active material comprising:

    artificial graphite particles; and
    a nitrogen element, an oxygen element, and a hydrogen element present on a surface, at an inside, or on the surface and at the inside of the artificial graphite particles,
    wherein the nitrogen element is included in an amount of 80 mg to 180 mg per 1 kg of the negative electrode active material.

2. The negative electrode active material according to claim 1, wherein the oxygen element is included in an amount of 650 mg to 1,000 mg per 1 kg of the negative electrode active material, and
    the hydrogen element is included in an amount of 300 mg to 500 mg per 1 kg of the negative electrode active material.

3. The negative electrode active material according to claim 1, wherein a ratio of a weight of the nitrogen element in the negative electrode active material to a weight of the oxygen element in the negative electrode active material is 0.12 or more.

4. The negative electrode active material according to claim 1, wherein a ratio of a weight of the hydrogen element in the negative electrode active material to a weight of the oxygen element in the negative electrode active material is 0.47 or more.

5. The negative electrode active material according to claim 1, wherein a ratio of a total weight of the nitrogen element and the hydrogen element in the negative electrode active material to a weight of the oxygen element in the negative electrode active material is 0.5 or more.

6. The negative electrode active material according to claim 1, wherein a total weight of the nitrogen element, the oxygen element, and the hydrogen element present in the negative electrode active material is 1,000 mg to 1,600 mg per 1 kg of the negative electrode active material.

7. The negative electrode active material according to claim 1, wherein the artificial graphite particles are in a form of secondary particles in which two or more primary particles are assembled.

8. The negative electrode active material according to claim 1, wherein a graphitization degree of the negative electrode active material is 90% to 99%.

9. The negative electrode active material according to claim 1, wherein the negative electrode active material has a BET specific surface area of 1 $m^2$/g to 8 $m^2$/g.

10. The negative electrode active material according to claim 1, further comprising:
    an amorphous carbon coating layer positioned on the artificial graphite particles.

11. A negative electrode comprising the negative electrode active material according to claim 1.

12. A lithium secondary battery comprising:

    the negative electrode according to claim 11;
    a positive electrode disposed to face the negative electrode;
    a separator interposed between the negative electrode and the positive electrode; and
    a non-aqueous electrolyte.

*FIG. 1*

```
                    ┌─────────────┐
                    │    START    │
                    └──────┬──────┘
                           │
                           ▼
        ┌──────────────────────────────────┐
        │      PULVERIZATION PROCESS        │───S110
        └──────────────────┬───────────────┘
                           │
                           ▼
        ┌──────────────────────────────────┐
        │     PRIMARY SHAPING PROCESS       │───S120
        └──────────────────┬───────────────┘
                           │
                           ▼
        ┌──────────────────────────────────┐
        │        ASSEMBLY PROCESS           │───S130
        └──────────────────┬───────────────┘
                           │
                           ▼
        ┌──────────────────────────────────┐
        │      GRAPHITIZATION PROCESS       │───S140
        └──────────────────┬───────────────┘
                           │
                           ▼
        ┌──────────────────────────────────┐
        │    SECONDARY SHAPING PROCESS      │───S150
        └──────────────────┬───────────────┘
                           │
                           ▼
                    ┌─────────────┐
                    │     END     │
                    └─────────────┘
```

## INTERNATIONAL SEARCH REPORT

| International application No. |
|---|
| **PCT/KR2024/020638** |

### A. CLASSIFICATION OF SUBJECT MATTER

**H01M 4/583**(2010.01)i; **H01M 10/0525**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/583(2010.01); C01B 32/05(2017.01); C01B 32/21(2017.01); H01M 10/052(2010.01); H01M 10/0525(2010.01); H01M 2/10(2006.01); H01M 4/133(2010.01); H01M 4/36(2006.01); H01M 4/38(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인조 흑연(artificial graphite), 음극 활물질(anode active material), 질소 (nitrogen), 산소(oxygen), 수소(hydrogen), 탄소 코팅층(carbon coating layer)

### C. DOCUMENTS CONSIDERED TO BE RELEVANT

| Category* | Citation of document, with indication, where appropriate, of the relevant passages | Relevant to claim No. |
|---|---|---|
| X | WO 2016-167591 A1 (LG CHEM, LTD.) 20 October 2016 (2016-10-20)<br>See paragraphs [0009], [0049], [0104] and [0105]; and claims 5, 7 and 21. | 1-12 |
| X | KR 10-2020-0089642 A (LG CHEM, LTD.) 27 July 2020 (2020-07-27)<br>See paragraphs [0003] and [0007]; and claim 1. | 1-12 |
| A | KR 10-2317512 B1 (KNU-INDUSTRY COOPERATION FOUNDATION) 26 October 2021 (2021-10-26)<br>See claims 1 and 14. | 1-12 |
| A | KR 10-1551407 B1 (POSCO CHEMTECH CO., LTD. et al.) 09 September 2015 (2015-09-09)<br>See paragraph [0043]; and claims 1 and 11. | 1-12 |
| A | JP 2023-134577 A (DIC CORPORATION) 27 September 2023 (2023-09-27)<br>See claims 1, 5, 11 and 15. | 1-12 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **24 March 2025** | **24 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 765 252 A1

| Patent document cited in search report | | | Publication date (day/month/year) | Patent family member(s) | | | Publication date (day/month/year) |
|---|---|---|---|---|---|---|---|
| WO | 2016-167591 | A1 | 20 October 2016 | KR | 10-1913902 | B1 | 31 October 2018 |
| | | | | KR | 10-2016-0123244 | A | 25 October 2016 |
| | | | | US | 11152621 | B2 | 19 October 2021 |
| | | | | US | 2018-0090761 | A1 | 29 March 2018 |
| KR | 10-2020-0089642 | A | 27 July 2020 | CN | 113646927 | A | 12 November 2021 |
| | | | | CN | 113646927 | B | 30 July 2024 |
| | | | | EP | 3893297 | A1 | 13 October 2021 |
| | | | | EP | 3893297 | A4 | 23 March 2022 |
| | | | | KR | 10-2485284 | B1 | 06 January 2023 |
| | | | | US | 12176544 | B2 | 24 December 2024 |
| | | | | US | 2022-0115667 | A1 | 14 April 2022 |
| | | | | WO | 2020-149681 | A1 | 23 July 2020 |
| KR | 10-2317512 | B1 | 26 October 2021 | KR | 10-2021-0031218 | A | 19 March 2021 |
| KR | 10-1551407 | B1 | 09 September 2015 | KR | 10-2014-0141861 | A | 11 December 2014 |
| JP | 2023-134577 | A | 27 September 2023 | CN | 118266103 | A | 28 June 2024 |
| | | | | JP | 7323089 | B1 | 08 August 2023 |
| | | | | JP | 7552803 | B2 | 18 September 2024 |
| | | | | WO | 2023-100548 | A1 | 08 June 2023 |

**INTERNATIONAL SEARCH REPORT**
Information on patent family members

International application No.

**PCT/KR2024/020638**

Form PCT/ISA/210 (patent family annex) (July 2022)